# EUROPEAN PATENT SPECIFICATION

(11) **EP 0 843 974 B1**
(45) Date of publication and mention of the grant of the patent: **11.09.2002**
(21) Application number: 97119384.2
(22) Date of filing: 06.11.1997
(51) Int. Cl.: A24C 5/34, G01N 21/88, B65B 19/30

(54) **Method and device for inspecting without direct contact the ends of cigarettes, or similar**
Verfahren und Vorrichtung zur berührungslosen Prüfung des Endes von Zigaretten oder dergleichen
Procédé et dispositif de contrôle sans contact des extrémités des cigarettes ou analogues

(30) Priority: 20.11.1996 IT SV960040
(43) Date of publication of application: 27.05.1998
(73) Proprietor: SASIB S.p.A., 40128 Bologna (IT)
(72) Inventor: Zavatta, Stefano, 40134 Bologna (IT); Lodi, Iller, 40127 Bologna (IT)
(74) Representative: Karaghiosoff, Giorgio Alessandro, Dott.

(56) References cited:
- EP-A- 0 370 231
- EP-A- 0 553 699
- EP-A- 0 585 686
- EP-A- 0 630 586
- GB-A- 2 115 144
- GB-A- 2 176 598
- US-A- 3 818 223
- US-A- 5 353 357

## Description

Method and device for inspecting without direct contact of the the ends of the cigarettes, or similar and a device for carrying and the method, according to the preambles of claims 1 and 15. Such a method and device is known from US 3 818 223.

The invention relates to a method for inspecting without contact the ends of cigarettes, or similar, in where the conformation of at least one side of the ends of the cigarettes, that is the side of the fillter end and/or the degree of filling with tobacco in correspondence to the end on the opposite side are detected by illuminating by means of a light source of preset intensity at least one zone of the end of each oigarette and measuring the intensity of the light of said illuminated zone.

At present divers methods for inspecting the cigarettes ends are known which use optical measuring technologies. The intensity of the light reflected is a function of the distance of the zone illuminated by the light source and of at least one sensor and also of the colour of the tobacco. Therefor the measurements obtained by optical means are generally affected by inaccuracies due to divers colouring of also spots of the tobacco within the range of each end. Therefor, the divers colouring within the range of the end of each cigarette can simulate differences in the filling of the cigarette ends, such as voids, that is depressions, or parts protruding out of the same.

At present divers attemps have been made to eliminate the effect of the colour of the tobacco on the measurements. These methods however are very complex and are not true to the point to render the optical inspection reliable. On the other hand the optical inspection of the cigarettes presents considerable advantages in that it does not mechanically stress the cigarettes thus avoiding damaging the product. A further advantage of the optical inspection consists in the fact that it does not have moving mechanical parts which can limit the speed of operation of the manufacturing machines and which require in order to avoid this occurrence often complex and economically onerous constructions.

The invention has therefor the purpose to create a method for the optical inspection of the ends of the cigarettes, which allows to eliminate effectively and without noteworthy increases in cost and construction the inconveniences and inaccuracies due to the different hues of the tobacco, rendering the method of optical inspection functionally reliable and true allowing to utilize in full the advantages of the same.

The invention achieves the above purposes with a method for an inspection without contact of the cigarette ends, or similar, of the type described at the beginning, and where the intensity reflected by at least one part of the illuminated zone of the end of the cigarettes is detected seperately by at least two divers angle shots relative to the axis of the cigarettes and relative to the direction of the rays and/or of the cone of illumination, while the value of the measurement relative to the conformation of the end of the cigarettes or of the filter, that is to the distance of the zone of the end or of the filter illuminated by the incident ray from the detection sensors or from a preset plane is obtained thanks to the elimination of the colour through combination of the two signals of measurements proportional to the intensity.

In this case, actually, the two signals differentiate substantially for the divers distance of the sensors from the illuminated zone, while the factor due to the colour of the tobacco is substantially identical in both values of the intensity measured.

As an alternative or in combination with the measurement of the intensity of the light reflected by the illuminated zone of the end of the cigarette it is possible to foresee the fact that the two measurements of intensity are relative to the light reflected by at least two parts of the illuminated zone at least partially not identical to each other.

The method according to the invention provides for the zone of illumination and the zones from which the reflected light is measured, to be considerably smaller than the entire surface of the cigarettes, while several measurements are taken one after the other illuminating in succession zones of the ends of the cigarettes at least partially diverse, selecting the distribution of the measurements in such a way, whereby a substantial part of the surface of the ends of the cigarettes is being covered, and the number of measurements is such as to satisfy a statistics sufficient for processing mean values with a low residual error.

The method according to the invention provides for the measurements of the intensity reflected under the at least two divers angle shots to be carried out substantially contemporaneously for the same illuminated zone.

According to a first form of execution, the elimination of the dependencies of the colour from the measurements of intensity one obtains during processing signals proportional to the intensity, these being substantially divided from each other.

In this case, the processing consists in summing the signals of measurement and dividing said sum by the difference of the same, while the magnitude thus obtained is the function of the distance having a linear term and a hyperbolic term. Choosing opportunely small the difference in distance between the sensors of measurement of the intensity of the reflected light, the processed signal becomes by good approximation a signal with a linear dependence from the distance between the illuminated zone of the cigarette ends and the sensors of reception of the intensity of the reflected light.

According to a variation which constitutes a perfectioning of the above-mentioned form of execution, the elimination of the effect of the colour can be carried out directly during measurement of the signal relative to the reflected intensity measured according to one of the two divers angle shots, preferably according to the angle shot relative to the lesser theoretical distance cigarette end and sensor, providing for a feed-back between the signal relative to the intensity of the reflected light under said angle shot and the intensity of illumination of the end.

In this case the feed-back acts in a manner as to compensate the drop or decrease of the signal relative to the reflected intensity by boosting it according to the intensity of the light emitted. Therefor, the intensity read with the first angle shot and used during processing has always a constant value.

The informations relative to the distance of the zone on which the reflected light is measured and therefor to the distance of the zone examined by the sensor from which the level of filling of the end can be extracted for said zone are given by the signal of the intensity of reflected light measured according to the second angle shot. Consequently the processing is limited to the simple division of the signals of intensity of the light reflected according to the two angle shots by a constant factor which corresponds to or is a function of the constant intensity measured under the first angle shot. This second form of execution allows for a considerable saving in processing time and on the complexity of the same allowing also to eventually lighten the construction of the actual processing unit.

In an advantageous manner for each zone of the cigarette end illuminated more measurements are made, and the value of the measurement of the reflected intensity appropriately processed according to the afore-said, are preferably interpreted in the following manner:
a) The value or values of the minimum distance of the cigarette ends from the corresponding measuring head obtained by successive measurings of the test scanning of the cigarette end, or the mean of the same, are interpreted as values for determining the effective length of the cigarette with reference to the distance of the two opposite ends.
b) The maximum value or values, or the mean of the same, relative to the distance of the cigarette ends, or of the zones examined on the same by the corresponding measuring head are interpreted as values of measurement of the irregularity of the filling of the ends, as for instance depressions or voids;
c) the mean of all or part of the measurement values of the distance of the cigarette ends from the corresponding measuring head which present a minimum variance between them, or at any rate a variance within the range of preset tolerances are interpreted as the mean position of the surface of the filling, or rather the level of filling of the end with reference to the edge of the end of the cigarette or cigarettes wrapping paper.

During the evaluation of the quality of the product with regards to the filling of the cigarette ends all paramaters indicated at point a), b), c) are used, as it is possible to set divers values of comparison and tolerance thresholds within which the difference between the values measured and the values of comparison must remain.

This expediant allows to distinguish in an aimed manner the cigarettes considered difective or of insufficient quality from the cigarettes considered good or of sufficient quality, allowing to consider divers typologies of features or defects and allowing furthermore to set with great ease divers typologies of product with regards to the quality of the same.

Obviously, the method according to the invention allows to adopt other typologies of interpretation of the measurement values, however, always free from the defect of the colouring of the filling material and which are alternatives and eventually also programmable as an alternatively possible activation in the inspection and processing unit.

According to a variant, in order to concentrate the search on the defects of the filling, or the possible zones where the filling is missing or insufficient, it is advantageous to eliminate from the preselected measurement value for the calculation of the mean, those values corresponding to peaks of filling, or the values corresponding to points of the end under measurement closer to the sensor. It is possible to provide for the elimination of one only, of some or of all said peaks of measurement.

The term light and illumination is understood to mean any type of electromagnetic radiation suitable for the purpose. In particular it is advantageous operating in the sector of the spectrum corresponding to red or to the infrared.

According to a further characteristic of the invention, it is possible to also provide a control procedure of the calibration of the measuring and illumination system and the automatic adjustment, at least partially of the same.

According to the above-mentioned, it becomes evident that measuring the intensity of the light reflected by the two opposite ends of the cigarettes substantially contemporaneously and said measurement of intensity being a function of the distance of the ends from the corresponding measuring heads which have a fixed and predefined position, the axial position of the cigarettes between the two measuring units is irrelevant at least within the range of the sufficiently wide preset tolerances.

However, to avoid that in case of excessive axial displacement of the cigarettes relative to the optimum position wrong measurement are made, the invention provides for the cigarettes to be also possibly aligned relative to a plane having a preset distance from the light source and from the measuring sensors during the transfer transversal to their axis in front of the illuminating and measuring units.

The invention also aims at a device for carrying out the above-mentioned method which comprises means for conveyance of the cigarettes in a preset position with at least one of the ends in front of a light source and in front of at least one sensor for measuring the intensity of the reflected light, while the light source and the sensors are arranged in a preset position relative to the means of conveyance, both with regards to the distance and with regards to their orientation, providing means of inspection and processing of the light source and of the signals of measurement.

In the device according to the invention at least two reading sensors are provided having two positions different to each other and/or two orientations different to each other with regards to the light source and consequently with regards to the illuminated zone of the cigarette ends, each of which is seperately connected to the inspection and processing unit.

The time base for the measurement and the correlation of the cigarettes being tested with the measurements is obtained by gathering the motion of conveyance of the cigarettes thanks to an encoder, or a suitable mechanical/electrical transducer.

In a preferred form of execution, a measuring unit is foreseen which has three optical fibers the terminal ends of which are arranged in a preset order and a preset position between them and are oriented with their axis parallel with the axis of the cigarrette ends under test. One of the three optical fibers is connected to a lilght source, while the other two are connected to opto-electrical or optoelectronic sensors of measurement which supply a signal proportional to the intensity of the light received from the optical fiber.

In an advantageous manner the device according to the invention is integrated into a conveying line of groups of cigarettes already arranged according to their disposition in a packet, and which are consequently arranged in several rows parallel with each other, a source of illumination and two measuring sensors being provided for each row of cigarettes, and the units being composed by the light source and the measurement sensors, that is by the ends of the associated optical fibers identical to each other such as order of relative disposition of said elements and arranged aligned with each other along an axis with an anywise and predetermined orientation, particularly perpendicular to the rows of cigarettes and level with the corresponding row of cigarettes.

According to a perfectioning, the inspection of the cigarette ends is carried out contemporaneously on both ends of the same, a measuring unit analagous to the one previously described is provided for on the two sides of the conveyor.

It is eventually possible to provide means of alignment of the cigarette ends in a preset position on a plane having a preset distance from the light source and from the measurement sensor.

Thanks to the above-mentioned expediencies, the method according to the invention allows to eliminate efficiently and with little effort both constructive as well as in the processing of the colour factor of the tobacco from the optical type test measurements. The device to carry out this method is easily workable and integrable in machines already existing. The result is extremely reliable in as much as it eliminates efficiently and in fact the colour factor from the measurements.

The further perfectings of the invention are subject of the subclaims.

The features of the invention and the advantages arising from the same are better evidenced from the following description of an non limiting example of execution illustrated in attached drawings, where:
Fig. 1 illustrates a schematic plan view of the device according to the invention, applied at the forming and conveying station of ordered groups of cigarettes of a packing machine.
Fig. 2 is an enlarged detail of the fig. 1 in the zone of the measuring unit.
The Fig.s 3 and 4 illustrate a front view on the active side of the measuring unit.
Fig. 5 is a graph showing two curves of the measurement of intensity reflected by an illuminated zone of a cigarette end, the two curves being associated with two detecting sensors which have divers distances from the illuminated zone.
Fig. 6 is a block diagram of the processing circuit and of the control of the measuring unit and of the reject device.

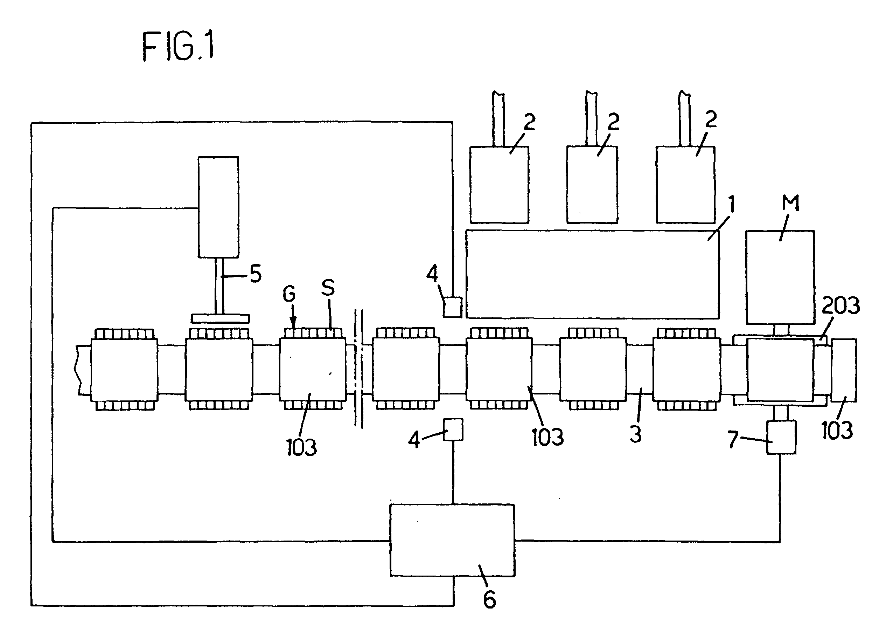

With reference to Fig. 1, a forming station of ordered groups of cigarettes, that is a group with a preset number of sigarettes which are arranged in the order they are ment to adopt in the packet, comprises a feed hopper 1, in where the cigarettes are arranged loose and oriented parallel with each other. The hopper 1 has three discharge mouthpieces side by side to feed one row of cigarettes, with a preset number of cigarettes. The rows of cigarettes are discharged onto a horizontal plane, where the planes are in correspondence with three mouthpieces staggered in height to each other substancially corrisponding to the position of the cigarettes within the range of the orderly group. Three transfer units 2 provide for feeding the cigarettes into a tubular housing 103 which is moved step by step along a track transversal to the axis of the cigarettes and offset in direction of the axis of the cigarettes relative to the delivery mouthpieces of the hoppers. The individual tubular housings, so called boxes, are moved from one delivery mouthpiece to other of the hpper 1 and the corresponding row of cigarettes is inserted into the box with an axial transfer of the cigarettes themselves.

The boxes, that is the tubular housings 103 are fitted on a continuous conveyor band 3 which extends itself transversal to the axis of the cigarettes and which is driven in steps in direction of the arrow A by a motor M. Downstream of the last delivery mouthpiece of the hopper 1, two end inspection units overall indicated with 4 are provided on opposite sides of the conveyor. Downstream of the inspection units 4 of the cigarette ends a discharge station 5 is provided for the groups of cigarettes, in which cigarettes with defective ends have been detected, that is in which the degree of filling is anomalous relative to a preset desired value. The reject device can be of any type and pushes the cigarettes of the defective group out of the corresponding tubular housing 103 into a rejects collection container not illustrated in detail.

The units 4 inspect optically the quality of the cigarette ends, in particular with regards to conformation of the filling material, tabacco or filter. In case of evident defect in degree of filling, the signal of measurement which reach a control unit 6 are transformed into signals for the reject unit drive.

The information regarding the correspondence of the signal read and processed with the group of cigarettes, that is the corresponding tubular housing 103, is supplied to the control and processing unit 6 by an encoder, that is a mechanical/eletrical or electronic transducer 7 which for example reads the rotation of the shaft driving the drive pulley 203. An encoder of this type can be the one so called absolute serial synchronous made by the firm Heidenein and marketed with the name ROC 412 5GS5.

In the zone of the control unit 4 an alignment guide 8 is foreseen for the cigarettes along at least one side of the conveyor 3 which has an inclined section 108 placed between the two branches of the straightline extremities and parallel with the direction of advance of the groups G of cigarettes S. The inspection units are arranged at a certain known and preset distance from the alignment plane of the cigarette ends S and in presence of at least one lateral guide 8 and a possible opposite lateral guide 8' and are placed in correspondence with a window 208 which can be open or closed with a part of barrier transparent to the radiation emitted.

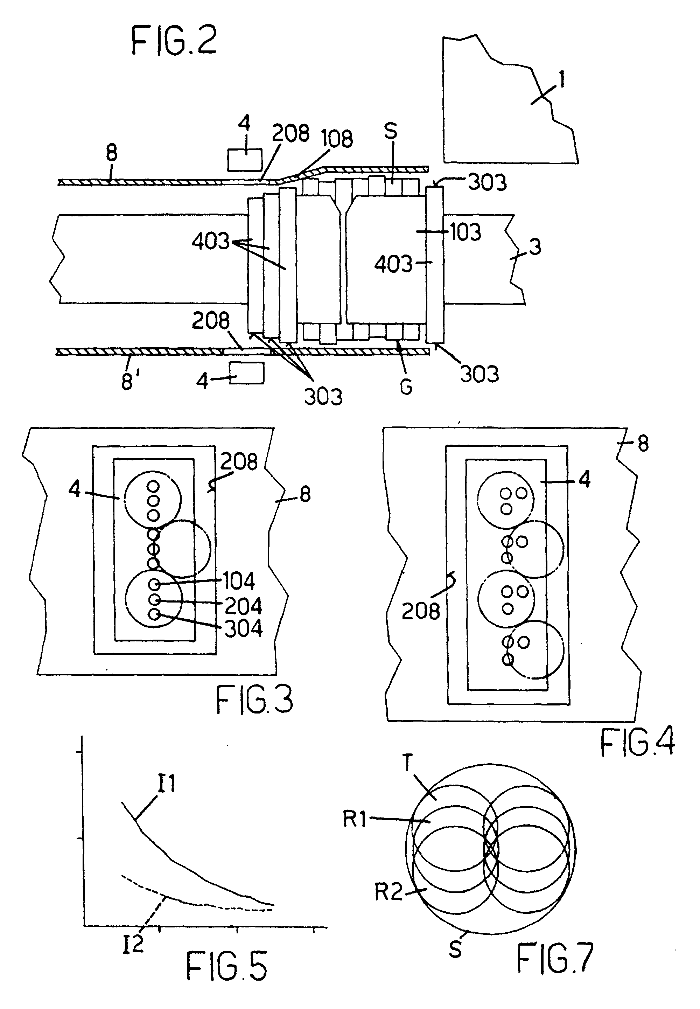

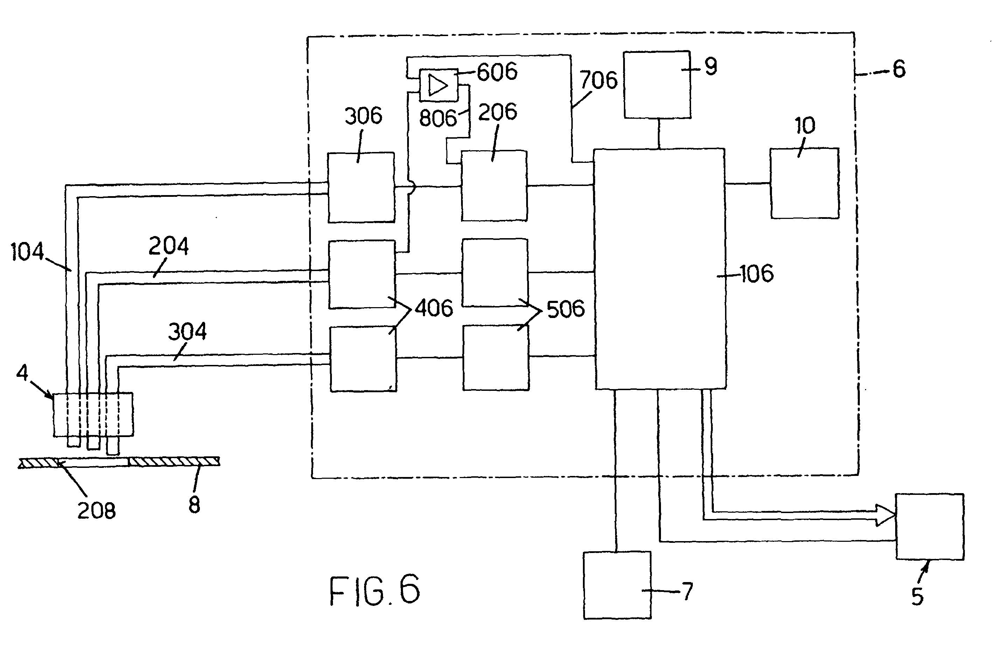

The inspection units 4 have in a vertically mutually aligned position and at a height coinciding with the ends of the divers horizontal superimposed rows of cigarettes S one optical fiber to illuminate the cigarette ends and two optical fibers to read the intensity of the light reflected by the illuminated zone R1, R2, which are illustrated in Fig.s 3, 4 and 6 and indicated with 104, 204, 304. The emitter/receiver heads of the optical fibers 104, 204, 304 can be arranged complanate to each other all at the same distance from the theoretical plane containing the ends of the cigarettes, or always at known but divers distances to each other as shown in Fig. 6. The arrangement of the emitter/receiver heads of the optical fibers 104, 204, 304 can be anywise and in Fig.s 3 and 4 are shown two examples of vertically aligned arrangement and a triangular arrangement. The optical fibers 104, 204, 304 have a diameter of approximately 1 mm and an aperture cone such to project, or collect the elettromagnetical radiation from substantially circular zones of the cigarettes with variable diameters in accordance with the preset cone of illumination or surveys and to the usual distances which can be set equal to approximately half the diameter of the cigarettes. In Fig. 7 are shown the zone of illumination I and the survey zones of the two optical fibers R1, R2 with reference to an arrangement of the same corresponding to Fig. 3.

The distance of the control units, in particular of the ends of emission and survey of the optical fibers from the plane of alignment of the cigarette ends S is contained within a field from 1 to 8 mm, preferably from 2 to 6 mm.

With reference to Fig. 6, the control and processing unit comprises a central microprocessor control unit 106 which through a digital analogue converter 206 controls the light source 306 connected to the optical fiber of illumination 104. This can allow for radiatiation in any desired field of the spectrum. It is particularly advantages to operate in the filed of red or infrared.

The survey optical fibers 204, 304 are each connected to an intensity sensor 406 appropriately calibrated on the spectral field of emission and which supplies the signals of measurement to the microprocessor 106 through an analogue/digital converter 506. Furthermore, the microprocessor 106 controls the correlation bewteen measurement and tubular housing 103 by receiving the signals of the encoder 7 and also controls the reject unit 5 both directly as well as through further units not illustrated in detail as not being relevant to the purpose of the invention.

Furthermore means of visual display, acustic alarm signals , print outs, video, means to process statistics, graphs or similar or a combination of the same can be added to the processing unit, that is to the microprocessor 106 and which are indicated with 10, as well as other types of pheripherals not illustrated and listed whose need arise from the applications and the requirements of the operators.

Between the intensity sensor 406 associated to one of the two optical fibers 204, 304, especially to the optical fiber closest to one of illumination 104 and the light source a feedback loop is provided consisting of a signal comparator 606, which compares the signal relative to the intensity measured by the optical fiber 204 and emitted by the sensor 406 with a comparison value 706 and whose output 806 controls the light source 306, in the sence of one variation of intensity suitable to compensate the variation of the signal relative to the intensity measured by the optical fiber 204 with regards to the signal of confrontation 806.

As evidenced in Fig. 7, for each zone of illumination I, projected on the cigarette end under examination by the optical fiber of illumination 104 the reflected radiation is collected under divers angle shots, contemporaneously from the two optical fibers 204 and 304, in particular as indicated in Fig. 7 as at least part of the radiation reflected by the illuminated zone 1 is gathered, as the aperture cones of the optical fibers 104, 204, 304 are arranged in such a manner whereby their projection on the cigarette end under examination overlap at least partially and in a different measure as far as the survey optical fibers 204, 304 are concerned. The divers disposition of the survey optical fibers 204, 304 relative to the optical fiber of emission translates therefor into a different angle shot of survey of the radiation reflected by zones at least partially coinciding with the illuminated zone I and at least partially divers to each other and that is equivalent to surveying the radiation reflected by the sensors arranged at divers distances form the illuminated zone I.

Fig. 5 illustrates the curve of the intensity of reflected radiation garthered by the two optical fibers in relation to the same from a plane of reflection. One of the two optical fibers 204 is closer to the optical fiber of emission 104 and gathers a greater intensity, while the other 304 a lesser intensity.

The difference in distance of the optical fibers of the illuminated zone I can be processed on the basis of the difference in distance from the center of the projections of the aperture cones of the optical fibers 104, 204, 304.

The measurements of the reflected instensity supply a signal proportional and at any rate correlated to the distance of the survey zones of the control unit 4, and as they are carried out contemporaneously on the two ends of the cigarettes allow for the processing of the measurement values of the same with regards to the zone occupied by the filling material, that is tabacco and/or filter.

It is possible to obtain measurement signals free from the influence of the colour by acting while processing the signals supplied by the two survey optical fibers 204, 304. In this case the individual signals relative to the intensity of the reflected light are added and subtracted between themselves and subsequently the ratio is made between the signal of the addition and the signal of the subtraction. In alternative to the above it is also possible to simply divide between themselves the measurement signals supplied by the optical fibers 204, 304.

This method of processing does not require the feedback loop 606,706, 806 but does make the processing more complex and longer.

In presence of the feedback loop comprising the parts 606, 706, 808, The influence of the colour of the filling material of the ends is directly eliminated by the compensation carried out on the intensity of the light emitted by the light source 306. In fact, in this case one of the signals, in particular the one associated with the optical fiber 204 is kept constant thanks to the action of the feedback loop. Therefor the division of the two signals is in this case limited to the simple division of the measurement signal obtained form the optical fiber 304 by a constant signal. This process is considerably faster and simpler and can also be easily carried out at the level of hardware, in as much as the constant value of intensity measured by the optical fiber 204 can be simply preset without requiring the actual direct reading.

The signal thus obtained is directly proportional to the distance of the illuminated zone I of the cigarette end from the light source, that is from the emission end of the optical fiber 104.

In presence of the cigarette alignment means 8, 8' the distance value is compared with the value of the distance of the emission end of the optical fiber 104 from the alignment plane of the cigarette ends and the eventual positive or negative differences constitute zones of anomalous filling, like potruding parts of the filler beyond the end of the paper wrapper or parts of the filling excessively recessed.

In an advantageous manner, for each cigarette end a scanning of the same is carried out, repeating several times the measurement during traverse of the cigarettes in front of the control unit with a frequency correlated to the speed of transit of the cigarettes. In Fig. 7 only two measurements are shown for simplicity.

To obtain a good reliability of measurement it is sufficient to carry out a number of measurements from 1 to 10 and possibly also higher depending on the surface of the section.

When the difference of the distance measured by the control exceeds a predetermined value of tolerance, the processing and control unit 6 emits a driving signal which drives the reject unit 5 with a delay equal to the time of advancement of the corresponding group of cigarettes G from the inspection station to the reject one and which is processed on hand of the information supplied by the encoder 7.

The optical fiber of illumination 104 is in an advantageous manner arranged in such a way, whereby the cone of illumination falls on the relevant part of the cigarette end, in particular on the central band of the same.

According to a further perfecting, the microprocessor 106 is programmed in such a way as to carry out a grading of the measurement values obtained on the basis of the variances relative to the same. In particular the values obtained by scanning the ends of each cigarette, are interpreted in the following manner:
a) The value or values of minimum distance of the cigarette ends from the corresponding measuring end obtained by the successive measurements of the inspection scanning of the cigarette end, that is the mean of the same, are interpreted as values for determining the actual length of the cigarette with reference to the distance of the two opposite ends.
b) The maximum value or values, or the mean of the same, relative to the distance of the the cigarette ends, that is of the zones inspected on the same by the corresponding measuring end are interpreted as values of measurement of the irregularities of the filling of the ends, as for instance depressions or voids;
c) the mean of all or part of the values of measurement of distance of the cigarette ends from the corresponding measuring end that have a minium variance between themselves, or at any rate a variance within the range of preset tolerances are interpreted as the mean position of the filling surface in correspondence to the associated end, that is the level of filling of the end with reference to the edge of the end of the wrapping paper or papers.

During the evaluation of the quality of the product with regards to the filling of the cigarette ends all the parameters as at points a) b) c) are utilized, as it is possible to set divers values of comparison and tolerance thresholds within which the difference between the values measured and the values of comparison must remain.

This expediant allows to distinguish in an aimed manner the cigaretttes considered defective or of insufficient quality from the cigarettes considered good or of sufficient quality and allowing furthermor to set with ease diverse typologies od product with regards to the quality of the same.

Obviously the method according to the invention allows to adopt other typologies of interpretation of the measurement values, however, always free from the defect of the colouring of the filling material and which are alternatives and eventually also programmable as alternatively possible activation in the control and processing unit.

Thus for example one alternative could be constituted by the fact that the measurement values excessively high or low relative to the mean of the same are left out. Of the remaining values retained reliable a mean is generated which will then be evaluated on the basis of the reference of the preset theoretical distance and substantially corresponding to the known distance of the emitting end of the illuminating optical fiber 104 from the plane of alignment of the ends of the cigarettes S.

According to a variant, in order to concentrate the search on defects of the filling, that is on the possible zones where the filling is missing or insufficient it becomes advantageous to eliminate from the preselected measurement values for calculating the mean, those values corresponding to peaks of the filling, that is the values corresponding to points of the end under survey closest to the sensor. It is possible to provide for the elimination of one only, of some or of all said measuring peaks.

As illustrated in Fig.s 3 and 4, the groups of cigarettes S have normally three superimposed horizontal rows. It is possible to make inspection units also for groups of cigarettes with four rows of superimposed cigarettes, simply by increasing the number of optical fibers 104, 204, 304.

In particular, since in the specific case, at least some of the rows of ciga-rettes are offset to each other, the center of the cigarette ends being offset substantially in correspondence to the radius of the same, the microprocessor 106 is programmed in such a way as to take into account the delay with which the ends of the cigarettes S of the offset rows pass in front of the optical fibers 104, 204, 304 associated with them. This delay can be easily calculated thanks to the speed of advance and to the degree of offset.

Furthermor, thanks to the encoder 7, the microprocessor 106 can also eventually take into account possible accelerations and decelerations during the advancing step of the tubular housings. However in this case it turns out simpler to provide the inspection units 4 in a position substantially coinciding with a zone of the advancing step where the speed is substantially constant.

According to a further perfecting of the invention, the method and the device provide for a diagnostic phase of autoadjustment and for the means of carrying out said phase.

The effects which must be taken into account are constituted by the electrical drifts of the processing circuit 6 and of the light source 306 as well as of the dust deposit on the ends of emitter and survey ends of the optical fibers 104, 204, 304.

In this case, as the inspection of the two opposite ends of the cigarettes takes place contemporaneously, it is possible to process the measurement signals supplied by the two opposed inspection units for calculating the length of the object under examination interposed between the same.

Therefor, the procedure of autodiagnostics and control provides for the execution of the measurement against opposite sample surfaces which are arranged at preset distances among themselves and with regards to the control units 4 on the opposite sides of the conveyor 3. Said standard surfaces are in an advantageous manner associated with the tubular housings 103 in the form of at least one tab or of lateral side ends 303 of the bars 403 provided on the sides transversal to the directions of advancement. The tabs or the side ends of said bars 403 are aligned substantially with the optimal theoretical position of the cigarette ends and be made one piece with the tubular housings or attached in an adjustable manner on the associated exsternal surfaces of the same.

It is possible to provide at least on one side of the tubular housings or on both of said sides several tabs or several bars 403 with divers positions among themselves as shown in Fig. 2.

The bars 403 have a preset length which can be preprogrammed into the microprocessor and a dimension of the side ends 303 in the direction of advance which is substantially identical to the diameter of the cigarettes. Furthermor, the side ends are made in an advantageous manner of a colour corresponding on the average to the one of the filling material of the associated end that is brownish for the ends filled with tobacco and cream-coloured for the ends filled with the filter, that is substantially and on average corresponding to the colour of ends of the cigarettes under examination. This in order to avoid peaks in the intensity or reduction in the intensity of the reflected radiation which, wandering excessively from the fields of intensity being measured, can saturate the sensors of intensity 406.

The procedure of self-diagnostic has a measuring phase which is substan-tially identical to the one of the inspection of the cigarette end which is carried out in correspondence to one or both bars associated with the tubular housings 103. The frequency of execution of the measurement of the self-diagnostic can be anywise, that is said procedure can be carried out for each tubular housing, or at intervals corresponding to a preset number of tubular housings, or at a preset number of measuring cycles.

The measurement signals relative to the bars 304 are collected by the microprocessor 106 which on the basis of the same calculates the lenght of the bar. This length measurement is then compared with the true one programmed into the microprocessor.

When the value resulting from the measurement has a difference with regards to the preset nominal value which is greater than the preset tolerance, the procedure of alarm and adjustment is carried out.

This procedure can have different phases and according to a preferred form of execution has a first phase of alarm requesting the control person to carry out a verification of the degree of cleanliness of the control unit 4, stopping the machine temporarily. Subsequently or as an alternative, or in presence of an enabling signal started by the operator, and subject to to an eventual further phase of measurement of the length of the bars 403, the microprocessor provides for the adjustment of the intensity of the light source 306 and of possible other components subject to considerable drift in order to obtain a measurement of the length of the bars 403 corresponding within the range of the preset tolerances to the nominal value preset for the same. In order to collect further information of self-diagnostic with which to perfect the adjustment it is possible to evaluate a part from the length of the bars obtained by measurement also the individual measurements of distance of the ends of the same from the corresponding optical fibers 204, 304, comparing the measured values with the nominal ones.

From what set forth above the advantages of the method and the device according to the invention become evident. As a matter of fact thanks to the ex-pediences described it is possible to eliminate the dependence of the measure-ments from the divers colouring of the tobacco and allows to make use of the remarkable advantages of the optical control systems. As a matter of fact the device is extremely simple and relatively inexpensive both from the constructional as well as the functional point of view. This guarantees sure and reliable operation. The optical means of inspection without contact can operate at any speed of operation of the associated machine, therefor without establishing limitation of the operating speed globaly reachable and without burdening the construction of the machine from the mechanical point of view.

The possibility of introducing procedures of self-diagnostic, or of self-adjustment makes the method and the device still more reliable. The procedure of self-adjustment and diagnostic do not call for sacrifices neither in terms of time nor in terms of constructive and processing complexity.

The invention is not limited to the executive forms herein described and illustrated but can be varied above all constructively, all without foresaking the protection sought for above and claimed hereunder.

## Claims

1. Method for the inspection without contact of the ends of cigarettes, wherein the condition of the end of the filter tip at one extremity of the cigarette and/or the degree of the tobacco filling of the end at the opposite extremity of the cigarette are detected by illuminating with a light source of preset intensity (306, 406) at least one zone (I) of at least one end surface of the cigarette and measuring with an inspection unit (4) from two different measuring positions provided in a measuring plane, the intensity of the light reflected (R1, R2) by two different examined areas of the illuminated zone (T) in order to obtain two measuring signals which are processed and combined to eliminate the effect of the color of the tobacco of the illuminated cigarette end surface on the obtained inspection signal,
**characterized in that**
- the intensity (I1, I2) of the light reflected (R1, R2) by the two examined areas of the illuminated zone of the cigarette end surface is measured at the same distance from the cigarette end surface,
- the two examined areas (R1, R2) of the illuminated zone (T) of the cigarette end surface have different sizes.
- the two measuring signals (I1, I2) corresponding to the intensity of the light reflected by the two examined areas of the illuminated zone (T) of the cigarette end surface are combined to obtain a value corresponding to the distance of the illuminated zone (T) from the measuring plane.

2. Method according to claim 1, **characterized in that** the elimination of the effect of the color of the tobacco filling of the illuminated zone of the cigarette end surface on the inspection signal is obtained by dividing the two measuring signals between each other.

3. Method according to claim 1 or 2, **characterized in that** the illuminated zone and the two examined areas from which the reflected light is measured are notably smaller than the entire cigarette end surface and several measurements are made one after the other by illuminating in succession at least partially different zones of the cigarette end surface and selecting the distribution of said illuminated zones so as to cover a substantial part of the cigarette end surface, the number of the measurements being such as to satisfy a statistics sufficient to process mean values with a low residual error.

4. Method according to claim 3, **characterized in that** the illuminated zone of the cigarette end surface and the two examined areas from which the reflected light is measured have a diameter equal to approximately half the diameter of the cigarette end surface or a size equal to approximately one quarter of the cigarette end surface.

5. Method according to claim 3 or 4, **characterized in that** for each cigarette end are taken 1 to 10, preferably 5 measurements distributed over the cigarette end surface.

6. Method according to one or more of the preceding claims, **characterized in that** the measurements of the intensity of the light reflected by the examined areas of different sizes are taken simultaneously for the same illuminated zone of the cigarette end surface and the two measuring signal obtained from these measurements or from the mean values of several successive measurements and transformed in values corresponding to the distance of the illuminated zone of the cigarette end surface from the measuring plane are interpreted in the following manner:
- the value corresponding to the minimum distance is interpreted as value for the determination of the actual length of the cigarette,
- the value corresponding to the maximum distance is interpreted as value of the irregularities of the filling of the cigarette end, as for instance depressions or voids,
- the mean of all or of a part of the values corresponding to the distance of the cigarette end surface from the measuring plane, which values have a minimum variance between them or a variance within the range of preset tolerances, is interpreted as the mean position of the end surface of the tobacco filing referred to the associated cigarette end, that is the level of the tobacco referred to the edge of the end of the cigarette wrapping paper.

7. Method according to claim 6, **characterized in that** in order to concentrate the survey on the defects of the tobacco filling, that is on the possible zones where the tobacco filling is missing or insufficient, from the measurement values, selected for calculating the mean of these values, are eliminated the values corresponding to peaks of the tobacco filling, that is the values corresponding to points of the cigarette end surface closest to the measuring plane, eliminating only one or some or all said peaks of measurement.

8. Method according to one or more of the preceding claims **characterized in that** in order to transform the measuring signals corresponding to the intensity of the light reflected by the two examined areas of different sizes in values corresponding to the distance of the illuminated zone of the cigarette end surface from the measuring plane,
- the said two signals are added and subtracted from each other,
- the sum and the difference thus obtained are divided by each other,
- the signal obtained by said division is transformed into a value of distance by means of an empirical table of reference or of a theoretical function having an linear term and a hyperbolic term,
- the distance between the measuring positions of the intensity of the light reflected by the two examined areas is chosen small enough to permit the neglect of said hyperbolic term.

9. Method according to one or more of the preceding claim, **characterized in that** the intensity of the light reflected by one of the two examined areas, preferably of the light reflected by the examined area closer to the light source, is compared by means of a feed-back loop with a preset reference value and is transformed into a correction value for regulating the intensity of illumination of the illuminated zone of the cigarette end surface, so as to compensate the difference between the measured intensity of the light reflected by said one examined area and the preset reference value, while this preset reference value constitutes the constant of normalization as the measuring signal corresponding to the intensity of the light reflected by the other examined area is divided by the said preset constant value.

10. Method according to one or more of the preceding claims, **characterized in that** the light source emits red or infrared light or light color amber, that is light in the spectral field from 500 to 850 nm.

11. Method according to one ort more of the preceding claims, **characterized in that** the inspection takes place during the conveyance of the cigarettes past a stationary inspection unit, correlating the advance motion of the cigarettes whit the inspection of a predetermined cigarette.

12. Method according to one or more of the preceding claims 1 to 10, **characterized in that** the inspection takes place during the conveyance of successive groups of cigarettes past a stationary inspection unit, each group of cigarettes comprising a predetermined number of cigarettes arranged in several superposed rows, the inspection being carried out simultaneously for the cigarettes of each row.

13. Method according to one or more of the preceding claims, **characterized in that** it comprises a procedure of self-diagnostic and/or self-adjustment consisting **in that** cigarette-like calibration rods with opposite end surfaces at preset distances between each other and with regard to the inspection units are made pass analogous to the cigarettes in front of the inspection units and are subjected at predetermined and regular intervals to an inspection analogous to the inspection of the cigarettes, calculating the distance obtained from the measuring signals of at least one or both end surfaces of the calibration rods from the corresponding inspection unit or the distance to each other of the end surfaces of the calibration rods, and said distances or one of them are compared with the preset nominal value of the respective distance and when the values measured do not correspond with those actually preset, within a preset range of tolerance, a procedure of alarm and/or stoppage for cleaning the inspection units or of definition and/or automatic adjustment of the intensity of the light source and/or of other units subject to drift is started, as long as the value measured on the basis of the calibration rods does not result corresponding, in the preset tolerance, with the preset nominal value.

14. Method according to claim 13, **characterized in that** cigarette-like calibration rods are utilized, whose end surface have a color substantially corresponding to the mean color of the cigarette end surfaces.

15. Device for carrying out the method according to one or more of the preceding claims, comprising:
a) conveyor means (3, 103) which bring the cigarettes (S) one after the other with at least one of their end surfaces in a preset position in front of an inspection unit (4),
b) means of alignment of the cigarette end surfaces in a preset plane facing the inspection unit (4),
c) three optical fibers (104, 204, 304) provided in the inspection unit (4) and whose open ends are arranged next to each other in a measuring plane parallel to the alignment plane of the cigarette end surfaces and are directed toward the cigarette end surfaces,
d) a light source connected to one (104) of the three optical fibers and illuminating at least a zone (T) of the cigarette end surface,
e) each of the other two optical fibers (204, 304) captures the light reflected by a different area of the illuminated zone (T) of the cigarette end surface and is connected to a control and processing unit (6) comprising optoelectrical or optoelectronical measuring sensors (406) which supply measuring signal proportional to the intensity of the reflected light captured by the two optical fibers (204, 304),
**characterized in that**
f) the ends of the optical fibers (104, 204, 304) are disposed at the same distance from the end surface of the examined cigarette and their axis are parallel to the axis of the examined cigarette (S),
g) the projections (R1, R2) of the cones of view of the two light capturing optical fibers (204, 304) on the illuminated zone (T) of the cigarette end surface have different sizes,
h) the control and processing unit (6) comprises means of summation, subtraction and division of the measuring signals supplied by the measuring sensors (406) for obtaining the distance of the illuminated zone (T) of the cigarette end surface from the measuring plane.

16. Device according to claim 15, **characterized in that** a mechanical/electrical transducer (7) is provided connected dynamically to the driving means (M) of the cigarette conveyor (3, 103) and electrically to the control and processing unit (6) for the correlation of the examined cigarette (S) with the respective measuring signals.

17. Device according to claim 15 or 16, **characterized in that** a conveyor (3, 103) of several superposed horizontal rows of cigarettes is provided and an illuminating optical fiber (104) and al least two light capturing optical fibers (204, 304) are arranged for each cigarette row.

18. Device according to claim 17, **characterized in that** the groups of three optical fibers (104, 204, 304) associated to the superposed horizontal rows of cigarettes are vertically aligned to each other.

19. Device according to one or more of the preceding claims 15 to 18, **characterized in that** the optical fibers have a diameter in the order of approximately 1 mm, while the projections of the cones of view of the optical fibers (104, 204, 304) one the cigarette end surface have each a diameter in the order of a few millimeters, particularly in the order of 2 to 5 mm, and have specially each a diameter equal to half the diameter of a cigarette.

20. Device according to one or more of the preceding claims 15 to 19, **characterized in that** the control and processing unit (6) comprises a programmable microprocessor (106), to which are connected the optoelectrical or optoelectronical sensors (406) associated with the light capturing optical fibers (204, 304) and the light source (306) associated with the illuminating optical fiber (104).

21. Device according to claim 20, **characterized in that** the optoelectrical or optoelectronical sensors (406) are connected to the microprocessor (106) by means of analogue/digital converters, while the light source (306) is connected to a command output of the microprocessor (106) by means of a digital/analogue converter (206).

22. Device according to one or more of the preceding claims 15 to 21, **characterized in that** the output of at least one of the light capturing optical fibers (204, 304) or of the associated sensor (406) is connected to a command input of the light source (306) by a feed-back loop comprising means (606) of comparison of the signal corresponding to the intensity of the reflected light captured by one of the light capturing optical fibers (204, 304), with a preset value of this signal, a which means (606) are provided with a command output (806) connected to the command input of the light source.

23. Device according to claim 22, **characterized in that** the feed-back loop connects to each other the command input of the light source (306) and the output of the light capturing optical fiber, whose end is closest to the end of the illuminating optical fiber (104).

24. Device according to one or more of the preceding claims 20 to 23, **characterized in that** a command output of the microprocessor (106) is connected with an command input of a reject device (5) which discharge the detected defective cigarettes.

25. Device according to one or more of the preceding claims 15 to 23, **characterized in that** the cigarette conveyor (3) is a so-called box type conveyor and has a succession of tubular housings (103) equidistant from each other in the advancement direction and which are made to stepwise advance on a rectilinear track passing between two opposite inspection units (4), and cigarette-like calibration rods (403, 404) oriented transversally to the advancement direction and having a predetermined length and opposite end surfaces placed at preset distances from the respective inspection units (4) are arranged on the front side and/or on the rear side of at least some and preferably of all of said tubular housings (103).

## Patentansprüche

1. Verfahren zur berührungsfreien Prüfung von Zigarettenenden, wobei der Zustand des Endes des Filtermundstücks an einem Ende der Zigarette und / oder der Grad der Tabakfüllung an dem entgegengesetzten Ende der Zigarette ermittelt werden, indem man mit einer Lichtquelle (306, 406), deren Intensität vorher eingestellt worden ist, wenigstens eine Zone (I) von wenigstens einer Oberfläche des Zigarettenendes anstrahlt und mit einer Prüfeinheit (4) von zwei unterschiedlichen Messpositionen, die sich in einer Messebene befinden, die Intensität des Lichts (R1, R2) misst, das von zwei unterschiedlichen, untersuchten Flächen der angestrahlten Zone (T) reflektiert wird, um so zwei Messsignale zu gewinnen, die verarbeitet und kombiniert werden, um die Auswirkung der Farbe des Tabaks der angestrahlten Oberfläche des Zigarettenendes auf das gewonnene Prüfsignal zu eliminieren, **dadurch gekennzeichnet, dass**
- die Intensität (I1, I2) des Lichts (R1, R2), das von den zwei untersuchten Flächen der angestrahlten Zone der Oberfläche des Zigarettenendes in demselben Abstand zu der Oberfläche des Zigarettenendes gemessen wird,
- die zwei untersuchten Flächen (R1, R2) der angestrahlten Zone (T) auf der Oberfläche des Zigarettenendes unterschiedliche Größen haben,
- die zwei Messsignale (I1, I2), die der Intensität des Lichts entsprechen, das von den beiden untersuchten Flächen der angestrahlten Zone (T) auf der Oberfläche des Zigarettenendes reflektiert wird, kombiniert werden, um einen Wert zu gewinnen, der dem Abstand der angestrahlten Zone (T) von der Messebene entspricht.

2. Verfahren nach Anspruch 1, **dadurch gekennzeichnet, dass** die Eliminierung der Auswirkung der Farbe der Tabakfüllung der angestrahlten Zone der Oberfläche des Zigarettenendes auf das Prüfsignal dadurch realisiert wird, dass eines der zwei Messsignale durch das andere dividiert wird.

3. Verfahren nach Anspruch 1 oder 2, **dadurch gekennzeichnet, dass** die angestrahlte Zone und die zwei untersuchten Flächen, von denen das reflektierte Licht gemessen wird, merklich kleiner sind als die gesamte Oberfläche des Zigarettenendes und mehrere Messungen nacheinander durchgeführt werden, indem sukzessive wenigstens zum Teil unterschiedliche Zonen auf der Oberfläche des Zigarettenendes angestrahlt werden und die Verteilung der besagten, angestrahlten Zonen so ausgewählt wird, dass ein wesentlicher Teil der Oberfläche des Zigarettenendes abgedeckt wird, wobei die Anzahl der Messungen so groß ist, dass die Anforderungen der Statistik in ausreichendem Umfang eingehalten werden, um Mittelwerte mit einem geringen Restfehler zu verarbeiten.

4. Verfahren nach Anspruch 3, **dadurch gekennzeichnet, dass** die angestrahlte Zone auf der Oberfläche des Zigarettenendes und die zwei untersuchten Flächen, von denen das reflektierte Licht gemessen wird, einen Durchmesser haben, der näherungsweise gleich dem halben Durchmesser der Oberfläche des Zigarettenendes ist oder eine Größe haben, die näherungsweise gleich einem Viertel der Oberfläche des Zigarettenendes ist.

5. Verfahren nach Anspruch 3 oder 4, **dadurch gekennzeichnet, dass** für jedes Zigarettenende 1 bis 10 und vorzugsweise 5 Messungen verteilt über die Oberfläche des Zigarettenendes vorgenommen werden.

6. Verfahren nach einem oder mehreren der vorherigen Ansprüche, **dadurch gekennzeichnet, dass** die Messungen der Intensität des Lichts, das von den untersuchten Flächen unterschiedlicher Größe reflektiert wird, gleichzeitig für die gleiche angestrahlte Zone auf der Oberfläche des Zigarettenendes durchgeführt wird und die zwei Messsignale, die aus diesen Messungen oder aus den Mittelwerten von mehreren sukzessiven Messungen gewonnen und in Werte umgewandelt werden, die dem Abstand der angestrahlten Zone auf der Oberfläche des Zigarettenendes von der Messebene entsprechen, in der folgenden Weise ausgewertet werden:
- der Wert, der dem minimalen Abstand entspricht, wird als der Wert zur Ermittlung der tatsächlichen Länge der Zigarette angesehen,
- der Wert, der dem maximalen Abstand entspricht, wird als der Wert für die Unregelmäßigkeiten in der Füllung des Zigarettenendes wie beispielsweise Vertiefungen oder Hohlräume angesehen,
- der Mittelwert von allen Werten oder einem Teil der Werte, die dem Abstand der Oberfläche des Zigarettenendes von der Messebene entsprechen, wobei die Werte eine minimale Varianz untereinander oder eine Varianz innerhalb des Bereichs von vorher festgelegten Toleranzen haben, wird als die mittlere Position der Endoberfläche der Tabakfüllung in Bezug auf das zugehörige Zigarettenende ― das heißt als das Niveau des Tabaks in Bezug auf die Kante des Endes des die Zigarette umhüllenden Papiers ― angesehen.

7. Verfahren nach Anspruch 6, **dadurch gekennzeichnet, dass** ― um die Prüfung auf die Fehlstellen der Tabakfüllung zu konzentrieren, dass heißt auf die möglichen Zonen, in denen die Tabakfüllung fehlt oder unzureichend ist ― aus den Messwerten, die ausgewählt wurden, um den Mittelwerte dieser Werte zu berechnen, diejenigen Werte eliminiert werden, die Höchstwerten der Tabakfüllung entsprechen, das heißt diejenigen Werte, die den Punkten der Oberfläche des Zigarettenendes entsprechen, welche der Messebene am nächsten liegen, wobei nur ein oder einige oder alle besagten Höchstwerte der Messung eliminiert werden.

8. Verfahren nach einem oder mehreren der vorherigen Ansprüche, **dadurch gekennzeichnet, dass**, um die Messsignale, die der Intensität des Lichts entsprechen, welches von den zwei untersuchten Flächen unterschiedlicher Größe reflektiert werden, in Werte umzuwandeln, die dem Abstand der angestrahlten Zone der Oberfläche des Zigarettenendes von der Messebene entsprechen,
- die besagten zwei Signale addiert und voneinander subtrahiert werden,
- die Summe und die Differenz, die auf diese Weise erhalten werden, durcheinander dividiert werden,
- das Signal, das durch die besagte Division gewonnen wird, in einen Abstandswert mit Hilfe einer empirischen Referenztabelle oder einer theoretischen Funktion mit einem linearen und einem hyperbolischen Term umgewandelt wird,
- der Abstand zwischen den Positionen zur Messung der Intensität des Lichts, das von den zwei untersuchten Flächen reflektiert wird, so klein gewählt wird, dass der besagte hyperbolische Term vernachlässigt werden kann.

9. Verfahren nach einem oder mehreren der vorherigen Ansprüche, **dadurch gekennzeichnet, dass** die Intensität des Lichts, das von einem der zwei untersuchten Flächen reflektiert wird, und zwar vorzugsweise von dem Licht, das von der untersuchten Fläche reflektiert wird, welche näher an der Lichtquelle ist, mit Hilfe einer Rückkopplungsschleife mit einem vorher eingestellten Bezugswert verglichen und in einen Korrekturwert umgewandelt wird, um die Intensität der Ausleuchtung der angestrahlten Zone auf der Oberfläche des Zigarettenendes zu regulieren und so die Differenz zwischen der gemessenen Intensität des Lichts, das von der besagten, einen untersuchten Fläche reflektiert wird, und dem vorher eingestellten Bezugswert zu kompensieren, wobei dieser vorher eingestellte Bezugswert die Normalisierungskonstante darstellt, wenn das Messsignal, das der Intensität des Lichts entspricht, welches von der anderen untersuchten Fläche reflektiert wird, durch den besagten, vorher eingestellten Konstantenwert dividiert wird.

10. Verfahren nach einem oder mehreren der vorherigen Ansprüche, **dadurch gekennzeichnet, dass** die Lichtquelle rotes oder infrarotes Licht oder bernsteinfarbenes Licht emittiert, das heißt Licht im Wellenlängenbereich von 500 bis 850 nm.

11. Verfahren nach einem oder mehreren der vorherigen Ansprüche, **dadurch gekennzeichnet, dass** die Untersuchung stattfindet, während die Zigaretten an einer stationären Prüfeinheit vorbeitransportiert werden, wobei die Vorwärtsbewegung der Zigaretten mit der Untersuchung einer vorher festgelegten Zigarette korreliert wird.

12. Verfahren nach einem oder mehreren der vorherigen Ansprüche 1 bis 10, **dadurch gekennzeichnet, dass** die Untersuchung stattfindet, während sukzessive Gruppen von Zigaretten an einer stationären Prüfeinheit vorbeitransportiert werden, wobei jede Gruppe von Zigaretten eine vorher festgelegte Anzahl von Zigaretten umfasst, die in mehreren übereinander geschichteten Reihen angeordnet sind und die Untersuchung gleichzeitig für die Zigaretten jeder Reihe durchgeführt wird.

13. Verfahren nach einem oder mehreren der vorherigen Ansprüche, **dadurch gekennzeichnet, dass** es eine Prozedur zur Selbstdiagnose und / oder Selbsteinstellung umfasst, die darin besteht, dass man zigarettenähnliche Kalibrierungsstäbe, deren gegenüberliegende Endoberflächen vorher eingestellte Abstände zwischen einander und in Bezug auf die Prüfeinheit haben, analog wie die Zigaretten vor den Prüfeinheiten vorbeitransportieren lässt und man diese in vorher festgelegten und regelmäßigen Intervallen einer Untersuchung unterzieht, die analog wie die Untersuchung der Zigaretten verläuft, und man den Abstand ― den man von den Messsignalen von wenigstens einer oder beiden Endoberflächen gewinnt ― der Kalibrierungsstäbe von der entsprechenden Prüfeinheit oder den Abstand der Endoberflächen der Kalibrierungsstäbe zueinander berechnet und man die besagten Abstände oder einen von diesen mit dem vorher eingestellten Nennwert des jeweiligen Abstands vergleicht und, wenn die gemessenen Werte nicht mit den eingestellten Ist-Werten innerhalb eines vorher eingestellten Toleranzbereichs übereinstimmen, eine Alarm- und / oder Unterbrechungsprozedur, um die Prüfeinheiten zu reinigen, oder eine Prozedur zur Festlegung und / oder zur automatischen Anpassung der Stärke der Lichtquelle und / oder der anderen Einheiten, die einer Drift unterlegen, eingeleitet wird, und zwar so lange, wie der Wert, der auf der Grundlage der Kalibrierungsstäbe gemessen wird, in dem vorher eingestellten Toleranzbereich nicht mit dem vorher eingestellten Nennwert übereinstimmt.

14. Verfahren nach Anspruch 13, **dadurch gekennzeichnet, dass** zigarettenähnliche Kalibrierungsstäbe verwendet werden, deren Endoberflächen eine Farbe haben, die im Wesentlichen mit der durchschnittlichen Farbe der Oberfläche der Zigarettenenden übereinstimmt.

15. Vorrichtung zur Durchführung des Verfahrens nach einem oder mehreren der vorherigen Ansprüche, umfassend:
a) Transportmittel (3, 103), welche die Zigaretten (S) eine nach der anderen mit wenigstens einer ihrer Endoberflächen in eine vorher eingestellte Position vor einer Prüfeinheit (4) bringen,
b) Mittel zur Ausrichtung der Oberflächen der Zigarettenenden in einer vorher eingestellten Ebene mit Blick auf die Prüfeinheit (4),
c) drei Glasfasern (104, 204, 304), die in der Prüfeinheit (4) bereitgestellt werden und deren offene Enden nebeneinander in einer Messebene parallel zu der Ausrichtungsebene der Oberflächen der Zigarettenenden angeordnet sind und zu den Oberflächen der Zigarettenenden weisen,
d) eine Lichtquelle, die mit einer (104) der drei Glasfasern verbunden ist und wenigstens eine Zone (T) der Oberfläche des Zigarettenendes anstrahlt,
e) wobei jede der beiden anderen zwei Glasfasern (204, 304) das Licht erfasst, das von einer anderen Fläche der angestrahlten Zone (T) der Oberfläche des Zigarettenendes reflektiert wird, und mit einer Steuer- und Verarbeitungseinheit (6) verbunden ist, die optoelektrische oder optoelektronische Messsensoren (406) umfasst, welche das Messsignal proportional zu der Intensität des reflektierten Lichts bereitstellen, das von den zwei Glasfasern (204, 304) erfasst wird,
**dadurch gekennzeichnet, dass**
f) die Enden der Glasfasern (104, 204, 304) in dem gleichen Abstand von der Endoberfläche der untersuchten Zigarette angeordnet sind und ihre Achsen parallel zu der Achse der untersuchten Zigarette (S) sind,
g) die Projektionen (R1, R2) der Sichtkegel der zwei Glasfasern (204, 304), die das Licht erfassen, auf die angestrahlte Zone (T) der Oberfläche des Zigarettenendes unterschiedliche Größen haben,
h) die Steuer- und Verarbeitungseinheit (6) Mittel zur Summenbildung, Subtraktion und Division der Messsignale umfasst, die von den Messsensoren (406) geliefert werden, um den Abstand der angestrahlten Zone (T) der Oberfläche des Zigarettenendes von der Messebene zu gewinnen.

16. Vorrichtung nach Anspruch 15, **dadurch gekennzeichnet, dass** ein mechanischer / elektrischer Messwandler (7) bereitgestellt wird, der dynamisch mit den Antriebsmitteln (M) des Zigarettenförderbands (3, 103) und elektrisch mit der Steuer- und Verarbeitungseinheit (6) verbunden ist, um die untersuchte Zigarette (S) mit den jeweiligen Messsignalen zu korrelieren.

17. Vorrichtung nach Anspruch 15 oder 16, **dadurch gekennzeichnet, dass** ein Förderband (3, 103) mit mehreren, übereinander geschichteten horizontalen Reihen von Zigaretten bereitgestellt wird und eine anstrahlende Glasfaser (104) und wenigstens zwei das Licht erfassende Glasfasern (204, 304) für jede Zigarettenreihe angeordnet sind.

18. Vorrichtung nach Anspruch 17, **dadurch gekennzeichnet, dass** die Gruppen von drei Glasfasern (104, 204, 304), die den übereinander geschichteten, horizontalen Reihen von Zigaretten zugeordnet sind, senkrecht zueinander ausgerichtet sind.

19. Vorrichtung nach einem oder mehreren der vorherigen Ansprüche 15 bis 18, **dadurch gekennzeichnet, dass** die Glasfasern einen Durchmesser in der Größenordnung von etwa 1 mm haben, wohingegen die Projektionen der Sichtkegel der Glasfasern (104, 204, 304) auf die Oberfläche des Zigarettenendes jeweils einen Durchmesser in der Größenordnung von wenigen Millimetern und insbesondere in der Größenordnung von 2 bis 5 mm haben und speziell jeweils einen Durchmesser haben, der dem halben Durchmesser einer Zigarette entspricht.

20. Vorrichtung nach einem oder mehreren der vorherigen Ansprüche 15 bis 19, **dadurch gekennzeichnet, dass** die Steuer- und Verarbeitungseinheit (6) einen programmierbaren Mikroprozessor (106) umfasst, an den die optoelektrischen oder optoelektronischen Sensoren (406), die zu den das Licht erfassenden Glasfasern (204, 304) gehören, und zu der Lichtquelle (306), die mit der anstrahlenden Glasfaser (104) verbunden ist, angeschlossen sind.

21. Vorrichtung nach Anspruch 20, **dadurch gekennzeichnet, dass** die optoelektrischen oder optoelektronischen Sensoren (406) an den Mikroprozessor (106) mit Hilfe von Analog/Digital-Wandlern angeschlossen sind, wohingegen die Lichtquelle (306) über einen Digital/Analog-Wandler (206) an einen Befehlsausgang des Mikroprozessors (106) angeschlossen ist.

22. Vorrichtung nach einem oder mehreren der vorherigen Ansprüche 15 bis 21, **dadurch gekennzeichnet, dass** der Ausgang von wenigstens einer der das Licht erfassenden Glasfasern (204, 304) oder des zugehörigen Sensors (406) mit einem Befehlseingang der Lichtquelle (306) über eine Rückkopplungsschleife verbunden ist, wobei diese Mittel (606) zum Vergleich des Signals, das der Intensität des reflektierten Lichts entspricht, welches von einer der Licht erfassenden Glasfasern (204, 304) erfasst wurde, mit einem vorher eingestellten Wert dieses Signals umfasst und diese Mittel (606) mit einem Befehlsausgang (806) bereitgestellt werden, der an den Befehlseingang der Lichtquelle angeschlossen ist.

23. Vorrichtung nach Anspruch 22, **dadurch gekennzeichnet, dass** die Rückkopplungsschleife den Befehlseingang der Lichtquelle (306) und den Ausgang der das Licht erfassenden Glasfaser, dessen Ende dem Ende der anstrahlenden Glasfaser (104) am nächsten ist, verbindet.

24. Vorrichtung nach einem oder mehreren der vorherigen Ansprüche 20 bis 23, **dadurch gekennzeichnet, dass** ein Befehlsausgang des Mikroprozessors (106) mit einem Befehlseingang einer Zurückweisungseinheit (5) verbunden ist, welche die ermittelten fehlerhaften Zigaretten aussondert.

25. Vorrichtung nach einem oder mehreren der vorherigen Ansprüche 15 bis 23, **dadurch gekennzeichnet, dass** das Zigarettenförderband (3) ein Förderband des so genannten Kastentyps ist und eine Reihe von röhrenförmigen Gehäusen (103) hat, die in Vorwärtsrichtung gleiche Abstände voneinander aufweisen und die so gebaut sind, dass sie sich schrittweise auf einer geradlinigen Strecke vorwärts bewegen, die zwischen zwei gegenüberliegenden Prüfeinheiten (4) vorbeiführt, und zigarettenähnliche Kalibrierungsstäbe (403, 404) transversal zu der Richtung der Vorwärtsbewegung ausgerichtet sind und eine vorher eingestellte Länge haben und gegenüberliegende Endoberflächen, die in vorher eingestellten Abständen von den jeweiligen Prüfeinheiten (4) platziert sind, an der Vorderseite und / oder an der Rückseite von wenigstens einigen und vorzugsweise von allen der besagten röhrenförmigen Gehäusen (103) angeordnet sind.

## Revendications

1. Procédé pour l'inspection sans contact des extrémités de cigarettes, selon lequel l'état de l'extrémité du bout-filtre à un bout de la cigarette et/ou le degré du remplissage de tabac de l'extrémité au bout opposé de la cigarette sont détectés en éclairant au moyen d'une source de lumière d'intensité préfixée (306, 406) au moins une région (T) d'au moins une surface d'extrémité de la cigarette et en mesurant au moyen d'une unité d'inspection (4), à partir de deux positions de mesure différentes prévues dans un plan de mesure, l'intensité de la lumière réfléchie (R1, R2) par deux zones examinées différentes de la région éclairée (T) afin d'obtenir deux signaux de mesure qui sont traités et combinés de façon à éliminer l'effet de la couleur du tabac de la surface d'extrémité de cigarette éclairée sur le signal d'inspection obtenu, **caractérisé en ce que** :
- l'intensité (I1, I2) de la lumière réfléchie (R1, R2) par les deux zones examinées de la région éclairée de la surface d'extrémité de cigarette est mesurée à la même distance à partir de la surface d'extrémité de cigarette,
- les deux zones examinées (R1, R2) de la région éclairée (T) de la surface d'extrémité de cigarette ont des tailles différentes,
- les deux signaux de mesure (I1, I2) correspondant à l'intensité de la lumière réfléchie par les deux zones examinées de la région éclairée (T) de la surface d'extrémité de cigarette sont combinés pour obtenir une valeur correspondant à la distance de la région éclairée (T) à partir du plan de mesure.

2. Procédé suivant la revendication 1, **caractérisé en ce que** l'élimination de l'effet de la couleur du remplissage de tabac de la région éclairée de la surface d'extrémité de cigarette sur le signal d'inspection est obtenue en divisant les deux signaux de mesure l'un par l'autre.

3. Procédé suivant la revendication 1 ou 2, **caractérisé en ce que** la région éclairée et les deux zones examinées à partir desquelles la lumière réfléchie est mesurée sont notablement plus petites que la surface d'extrémité de cigarette entière et plusieurs mesures sont effectuées l'une après l'autre en éclairant successivement au moins des régions partiellement différentes de la surface d'extrémité de cigarette et en choisissant la répartition desdites régions éclairées de façon à couvrir une partie substantielle de la surface d'extrémité de cigarette, le nombre des mesures étant tel qu'il permet de satisfaire une statistique suffisante pour traiter des valeurs moyennes avec une erreur résiduelle faible.

4. Procédé suivant la revendication 3, **caractérisé en ce que** la région éclairée de la surface d'extrémité de cigarette et les deux zones examinées à partir desquelles la lumière réfléchie est mesurée ont un diamètre égal à approximativement la moitié du diamètre de la surface d'extrémité de cigarette ou une taille égale à approximativement un quart de la surface d'extrémité de cigarette.

5. Procédé suivant la revendication 3 ou 4, **caractérisé en ce que**, pour chaque extrémité de cigarette, il est pris 1 à 10, de préférence 5, mesures réparties sur la surface d'extrémité de cigarette.

6. Procédé suivant une ou plusieurs des revendications précédentes, **caractérisé en ce que** les mesures de l'intensité de la lumière réfléchie par les zones examinées de différentes tailles sont prises simultanément pour la même région éclairée de la surface d'extrémité de cigarette et les deux signaux de mesure obtenus à partir de ces mesures ou à partir des valeurs moyennes des mesures multiples successives et transformés en valeurs correspondant à la distance de la région éclairée de la surface d'extrémité de cigarette vis-à-vis du plan de mesure sont interprétés de la manière suivante :
- la valeur correspondant à la distance minimale est interprétée comme valeur pour la détermination de la longueur réelle de la cigarette,
- la valeur correspondant à la distance maximale est interprétée comme valeur des irrégularités du remplissage de l'extrémité de cigarétte, comme par exemple des parties en retrait ou des vides,
- la moyenne de la totalité ou d'une partie des valeurs correspondant à la distance de la surface d'extrémité de cigarette vis-à-vis du plan de mesure, lesquelles valeurs ont une variance minimale entre elles ou une variance dans la fourchette de tolérances préfixées, est interprétée comme la position moyenne de la surface d'extrémité du remplissage de tabac rapportée à l'extrémité de cigarette associée, c'est-à-dire le niveau du tabac rapporté au bord de l'extrémité du papier d'enveloppe de cigarette.

7. Procédé suivant la revendication 6, **caractérisé en ce qu'**afin de concentrer l'examen sur les défauts du remplissage de tabac, c'est-à-dire sur les zones possibles dans lesquelles le remplissage de tabac est manquant ou insuffisant, parmi les valeurs de mesure, choisies pour calculer la moyenne de ces valeurs, sont éliminées les valeurs correspondant à des pics du remplissage de tabac, c'est-à-dire les valeurs correspondant à des points de la surface d'extrémité de cigarette les plus proches du plan de mesure, en éliminant seulement un ou plusieurs ou la totalité desdits pics de mesure.

8. Procédé suivant une ou plusieurs des revendications précédentes, **caractérisé en ce qu'**afin de transformer les signaux de mesure correspondant à l'intensité de la lumière réfléchie par les deux zones examinées de tailles différentes en valeurs correspondant à la distance de la région éclairée de la surface d'extrémité de cigarette vis-à-vis du plan de mesure,
- lesdits deux signaux sont ajoutés et soustraits l'un de l'autre,
- la somme et la différence ainsi obtenues sont divisées l'une par l'autre,
- le signal obtenu par ladite division est transformé en une valeur de distance au moyen d'une table empirique de référence ou d'une fonction théorique ayant un terme linéaire et un terme hyperbolique,
- la distance entre les positions de mesure de l'intensité de la lumière réfléchie par les deux zones examinées est choisie suffisamment petite pour permettre que ledit terme hyperbolique soit négligé.

9. Procédé suivant une ou plusieurs des revendications précédentes, **caractérisé en ce que** l'intensité de la lumière réfléchie par une première des deux zones examinées, de préférence de la lumière réfléchie par la zone examinée plus proche de la source de lumière, est comparée au moyen d'une boucle de réaction à une valeur de référence préfixée et est transformée en une valeur de correction pour réaliser une régulation de l'intensité de l'éclairage de la région éclairée de la surface d'extrémité de cigarette, de façon à compenser la différence entre l'intensité mesurée de la lumière réfléchie par ladite première zone examinée et la valeur de référence préfixée, tandis que cette valeur de référence préfixée constitue la constante de normalisation comme le signal de mesure correspondant à l'intensité de la lumière réfléchie par l'autre zone examinée est divisé par ladite valeur constante préfixée.

10. Procédé suivant une ou plusieurs des revendications précédentes, **caractérisé en ce que** la source de lumière émet une lumière rouge ou infrarouge ou une lumière de couleur ambre, c'est-à-dire une lumière dans le domaine spectral de 500 à 850 nm.

11. Procédé suivant une ou plusieurs des revendications précédentes, **caractérisé en ce que** l'inspection a lieu pendant le transport des cigarettes les faisant passer devant une unité d'inspection fixe, en corrélant le mouvement d'avance des cigarettes avec l'inspection d'une cigarette préfixée.

12. Procédé suivant une ou plusieurs des revendications 1 à 10 précédentes, **caractérisé en ce que** l'inspection a lieu pendant le transport de groupes successifs de cigarettes les faisant passer devant une unité d'inspection fixe, chaque groupe de cigarettes comprenant un nombre préfixé de cigarettes disposées en plusieurs rangées superposées, l'inspection étant effectuée simultanément pour les cigarettes de chaque rangée.

13. Procédé suivant une ou plusieurs des revendications précédentes, **caractérisé en ce qu'**il comprend une procédure d'auto-diagnostic et/ou d'auto-ajustement consistant **en ce que** des tiges de calibrage analogues à des cigarettes comportant des surfaces d'extrémité opposées à des distances préfixées l'une vis-à-vis de l'autre et par rapport aux unités d'inspection sont astreintes à passer d'une manière analogue aux cigarettes face aux unités d'inspection et sont soumises à des intervalles préfixés et réguliers à une inspection analogue à l'inspection des cigarettes, en calculant la distance obtenue à partir des signaux de mesure d'au moins l'une des surfaces d'extrémité des tiges de calibrage ou les deux vis-à-vis de l'unité d'inspection correspondante ou la distance l'une vis-à-vis de l'autre des surfaces d'extrémité des tiges de calibrage, et lesdites distances ou l'une d'elles sont comparées à la valeur nominale préfixée de la distance respective et, lorsque les valeurs mesurées ne correspondent pas à celles effectivement préfixées, dans une fourchette préfixée de tolérances, une procédure d'alarme et/ou d'arrêt pour nettoyer les unités d'inspection ou de définition et/ou d'ajustement automatique de l'intensité de la source de lumière et/ou d'autres unités soumises à une dérive est lancée, aussi longtemps que la valeur mesurée sur la base des tiges de calibrage ne donne pas un résultat correspondant, dans la tolérance préfixée, à la valeur nominale préfixée.

14. Procédé suivant la revendication 13, **caractérisé en ce que** des tiges de calibrage analogues à des cigarettes sont utilisées, la surface d'extrémité de celles-ci ayant une couleur correspondant sensiblement à la couleur moyenne des surfaces d'extrémité de cigarette.

15. Dispositif de mise en oeuvre du procédé suivant une ou plusieurs des revendications précédentes, comprenant :
a) des moyens transporteurs (3, 103) qui acheminent les cigarettes (S) l'une après l'autre avec au moins l'une de leurs surfaces d'extrémité dans une position préfixée face à une unité d'inspection (4),
b) des moyens d'alignement des surfaces d'extrémité de cigarette dans un plan préfixé faisant face à l'unité d'inspection (4),
c) trois fibres optiques (104, 204, 304) prévues dans l'unité d'inspection (4) et dont des extrémités ouvertes sont disposées l'une à côté de l'autre dans un plan de mesure parallèle au plan d'alignement des surfaces d'extrémité de cigarette et sont dirigées vers les surfaces d'extrémité de cigarette,
d) une source de lumière reliée à l'une (104) des trois fibres optiques et éclairant au moins une région (T) de la surface d'extrémité de cigarette,
e) chacune des deux autres fibres optiques (204, 304) capte la lumière réfléchie par une région différente de la région éclairée (T) de la surface d'extrémité de cigarette et est reliée à une unité de commande et traitement (6) comprenant des capteurs de mesure optoélectriques ou optoélectroniques (406) qui fournissent un signal de mesure proportionnel à l'intensité de la lumière réfléchie captée par les deux fibres optiques (204, 304),
**caractérisé en ce que**
f) les extrémités des fibres optiques (104, 204, 304) sont disposées à la même distance de la surface d'extrémité de la cigarette examinée et leurs axes sont parallèles à l'axe de la cigarette examinée (S),
g) les projections (R1, R2) des cônes de vision des deux fibres optiques captant la lumière (204, 304) sur la région éclairée (T) de la surface d'extrémité de cigarette ont des tailles différentes,
h) l'unité de commande et traitement (6) comprend des moyens de sommation, soustraction et division des signaux de mesure fournis par les capteurs de mesure (406) pour obtenir la distance de la région éclairée (T) de la surface d'extrémité de cigarette vis-à-vis du plan de mesure.

16. Dispositif suivant la revendication 15, **caractérisé en ce qu'**il est prévu un transducteur mécanique/électrique (7) relié dynamiquement aux moyens d'entraînement (M) du transporteur de cigarettes (3, 103) et électriquement à l'unité de commande et traitement (6) pour la corrélation de la cigarette examinée (S) avec les signaux de mesure respectifs.

17. Dispositif suivant la revendication 15 ou 16, **caractérisé en ce qu'**un transporteur (3, 103) de plusieurs rangées horizontales superposées de cigarettes est prévu et une fibre optique d'éclairage (104) et au moins deux fibres optiques captant la lumière (204, 304) sont disposées pour chaque rangée de cigarettes.

18. Dispositif suivant la revendication 17, **caractérisé en ce que** les groupes de trois fibres optiques (104, 204,304) associés aux rangées horizontales superposées de cigarettes sont alignés verticalement entre eux.

19. Dispositif suivant une ou plusieurs des revendications 15 à 18 précédentes, **caractérisé en ce que** les fibres optiques ont un diamètre de l'ordre d'approximativement 1 mm, tandis que les projections des cônes de vision des fibres optiques (104, 204, 304) sur la surface d'extrémité de cigarette ont chacune un diamètre de l'ordre de quelques millimètres, en particulier de l'ordre de 2 à 5 mm, et ont spécialement chacune un diamètre égal à la moitié du diamètre d'une cigarette.

20. Dispositif suivant une ou plusieurs des revendications 15 à 19 précédentes, **caractérisé en ce que** l'unité de commande et traitement (6) comprend un microprocesseur programmable (106), auquel sont reliés les capteurs optoélectriques ou optoélectroniques (406) associés aux fibres optiques captant la lumière (204, 304) et la source de lumière (306) associée à la fibre optique éclairante (104).

21. Dispositif suivant la revendication 20, **caractérisé en ce que** les capteurs optoélectriques ou optoélectroniques (406) sont connectés au microprocesseur (106) au moyen de convertisseurs analogique/numérique, tandis que la source de lumière (306) est reliée à une sortie d'ordre du microprocesseur (106) au moyen d'un convertisseur numérique/analogique (206).

22. Dispositif suivant une ou plusieurs des revendications 15 à 21 précédentes, **caractérisé en ce que** la sortie d'au moins l'une des fibres optiques captant la lumière (204, 304) ou du capteur associé (406) est reliée à une entrée d'ordre de la source de lumière (306) par une boucle de réaction comprenant des moyens (606) de comparaison du signal correspondant à l'intensité de la lumière réfléchie captée par l'une des fibres optiques captant la lumière (204, 304), avec une valeur préfixée de ce signal, lesquels moyens (606) sont pourvus d'une sortie d'ordre (806) reliée à l'entrée d'ordre de la source de lumière.

23. Dispositif suivant la revendication 22, **caractérisé en ce que** la boucle de réaction relie l'une à l'autre l'entrée d'ordre de la source de lumière (306) et la sortie de la fibre optique captant la lumière, dont l'extrémité est la plus proche de l'extrémité de la fibre optique éclairante (104).

24. Dispositif suivant une ou plusieurs des revendications 20 à 23 précédentes, **caractérisé en ce qu'**une sortie d'ordre du microprocesseur (106) est reliée à une entrée d'ordre d'un dispositif de rejet (5) qui évacue les cigarettes défectueuses détectées.

25. Dispositif suivant une ou plusieurs des revendications 15 à 23 précédentes, **caractérisé en ce que** le transporteur de cigarettes (3) est ce qu'il est convenu d'appeler un transporteur du type à caissons et comporte une succession de boîtiers tubulaires (103) équidistants l'un de l'autre suivant la direction d'avance et qui sont astreints à une avance pas à pas sur une trajectoire rectiligne passant entre deux unités d'inspection (4) opposées, et des tiges de calibrage analogues à des cigarettes (403, 404) orientées transversalement à la direction d'avance et ayant une longueur préfixée et des surfaces d'extrémité opposées placées à des distances préfixées vis-à-vis des unités d'inspection (4) respectives sont disposées sur la face avant et/ou sur la face arrière d'au moins certains et de préférence de la totalité desdits boîtiers tubulaires (103).
